# EUROPEAN PATENT APPLICATION

(11) **EP 3 748 122 A1**
(43) Date of publication of application: **09.12.2020**
(21) Application number: 19178013.9
(22) Date of filing: 04.06.2019
(51) Int. Cl.: E21D 21/02, F16B 31/02

(54) **A TENSION INDICATOR FOR A ROCK BOLT**

(71) Applicant: Sandvik Mining and Construction Tools AB, 81181 Sandviken (SE); Sandvik Mining and Construction Australia Pty Ltd, Milton BC, QLD 4064 (AU)
(72) Inventor: WEAVER, Steven, Heatherbrae, 2324 (AU); RATAJ, Mietek, Heatherbrae, 2324 (AU); VALLATI, Osvaldo, Heatherbrae, 2324 (AU)
(74) Representative: Sandvik

(57) **Abstract**

A tension indication device (1) for a rock bolt (2), wherein the tension indication device (1) comprises a deformable body (6) to be compressed at tensioning of a nut attached to a trailing portion of a central rod of the bolt (2).

## Description

### Technical field

The present disclosure relates to rock bolts for reinforcement of formations and specifically to technology for promoting correct installation of such bolts.

### Background

Formations, such as rock formations, are often reinforced using expandable rock bolts. For example, expandable rock bolts are commonly used for roof bolting in mining tunneling, and for stabilization of rock walls, slopes and dikes. Various types of rock bolts or anchors are used depending for example on the type of formation to be reinforced.

A common type of expandable bolt is the hydraulically expandable rock bolt commonly provided with an expandable body to be driven into a formation and thereafter expanded by introduction of a pressurized pressure medium such that the expandable body presses against the wall of the borehole to frictionally anchor the bolt within the formation and thereby reinforce the formation. A hydraulically expandable rock bolt is known from CZ 25706 U1. WO 2017/187219 A1 relates to improvements of hydraulically expandable rock bolts and teaches an indicator for the clamping of such a bolt.

Another type of expandable rock bolt is the mechanically expandable rock bolt such as the one of AU2010223134B2. Such a rock bolt is generally driven into a formation by an installation device such as a jumbo. The bolt comprises an elongate expandable outer body and a central rod extending inside the outer body from a trailing portion provided with a nut to a leading portion operatively connected to an expansion mechanism for expanding the outer body upon rotation of the central rod.

At installation of an expandable rock bolt in the formation, the jumbo is operated to repeatedly impact the outer body of the bolt, thereby forcing the outer body into the formation. When the bolt is sufficiently far driven into the formation the bolt is to be expanded by rotation of the nut, which causes rotation of the central rod such that the expansion mechanism causes expansion of the outer body. Typically, the nut is a blind nut such that the nut can first be screwed onto a thread at the outer portion of the central rod, wherein the central rod eventually bottoms out in the blind nut, thereby preventing further relative rotation between the central rod and the blind nut. This allows torque to be applied to the nut and further to the central rod for tensioning of the expansion mechanism of the bolt. Other means for preventing co-rotation between the central rod and nut are feasible, such as thread-locking fluid or a shearing pin, wherein a standard open nut is used instead of a blind nut.

Sometimes, the tensioning of the central rod is not high enough due to lower than required torque output of the installation equipment which means that the bolt has not been expanded and thus does not reinforce the formation as good as it would normally do if correctly tensioned. Manual inspection and tightening of a plurality of bolts in a formation is time-consuming and error-prone and faulty installation of the expandable rock bolts is dangerous since portions of the formation may unintentionally collapse.

In other words, tensioning of the bolt translates as a compressive force on the rock strata, which is advantageous as it discourages cracks from opening up in and between the rock strata, and as rock is brittle, stopping the first micro-cracks may stop cracking and damage to the rock. Additionally, in mechanically expanding bolts, tension in the central rod can only be generated against a moving wedge which is also expanding and ever more tightly gripping the rock so the bolt will not slide out of the hole.

US 3,161,174 teaches a tension indication device for an expandable rock bolt but the technical solution is complex.

US 4,000,681 teaches a tension indication device for an expandable rock bolt but the technical solution is also complex.

Hence, there is a need for an improved means for promoting correct tensioning of rock bolts.

### Summary

An object of the invention is to promote correct tensioning of a rock bolt. According to a first aspect of the invention, this object is achieved by the inventive tension indication device as defined in the appended independent claim 1, with alternative embodiments defined in the dependent claims.

The tension indication device is suitable for a rock bolt for reinforcement of a formation, wherein the bolt comprises an elongate outer body and a central rod comprising a trailing portion provided with a nut. The tension indication device comprises a deformable body comprising a central hole sized such that the tension indication device fits around the trailing portion of the central rod on a formation-facing side of the nut. When the bolt has been driven into a formation it is important that the nut is rotated enough to cause a correct tensioning of the central rod. The tension indication device is positioned between the nut and the formation with the central rod extending through the central hole of the deformable body. Upon rotation of the nut for tensioning of the bolt, the nut presses the deformable body towards the formation wherein the formation, or a washer between the deformable body and the formation, eventually prevents further movement of the deformable body towards the formation. Upon continued rotation of the nut, the force exerted by the nut on the deformable body increases. The increased force eventually brings about visible deformation of the deformable body, such that someone inspecting the bolt will be able to easily spot the deformed deformable body and thereby know that tensioning of the central rod has occurred.

The material, shape and dimensioning of the deformable body may be such that upon being forced by nut the towards the formation with a first force the deformable body remains visibly intact until the first force exceeds a predetermined level of force, wherein the deformable body collapses or visibly deforms upon said first force exceeding the predetermined level of force. The nut is rotated for increasingly tensioning the central rod of the bolt until the deformable body collapses, wherein a predetermined level of force has been reached between nut and deformable body. This force corresponds to the tension in the central rod which has thus been correctly tensioned.

The deformable body may have an axisymmetric shape about its central axis. The axisymmetry increases the chance of the deformable body deforming symmetrically about the central rod such that the deformable body deforms predictably and is visible from many directions.

The deformable body may be hollow-cylindrical.

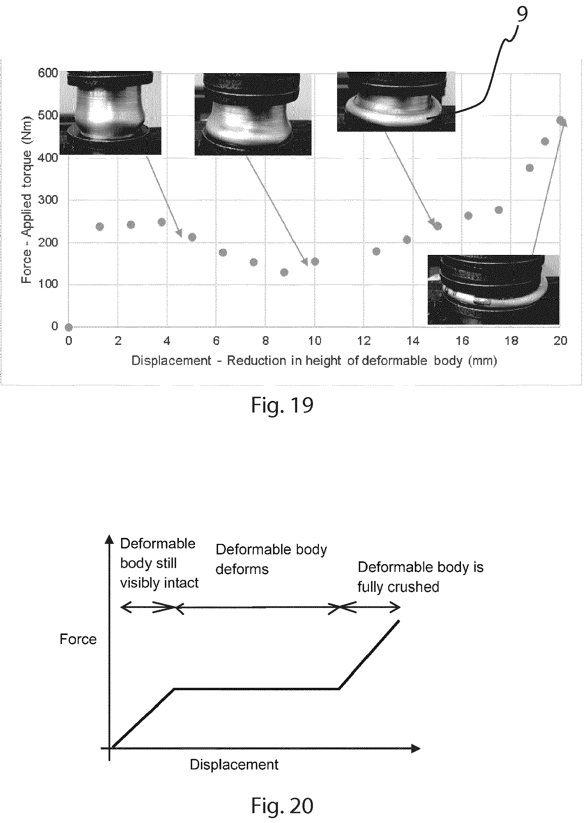

The deformable body may be widening from its opposing ends towards a central waist portion. The wider waist portion promotes a plateau on the force-displacement curve, as shown in Fig. 20, with smooth crushing and limited splitting causing sharp edges and disintegration into many pieces.

The deformable body may comprise a cylindrical portion and a conical portion widening towards an end of the deformable body.

Alternatively, the deformable body may be hollow-frustoconical.

The wall thickness of the deformable body may be decreasing towards a central waist portion of the deformable body.

The deformable body may have uniform wall thickness.

The deformable body comprises a plurality of circumferential recesses distributed along the central axis of the deformable body.

The deformable body may have a constant cross-sectional shape defined by a cylindrical main portion provided with a plurality of radially outwards protruding ribs extending along the length of the deformable body. The ribs may be provided with radially inwards open recesses extending along the length of the ribs.

Tension indication device may further comprise a first support washer positioned at the formation-side of the deformable body.

The tension indication device may further comprise a second support washer positioned at the nut-facing side of the deformable body. The second support washer reduces the amount of torsion applied to the deformable body by the nut.

According to a second aspect of the invention, the object is also achieved by a system comprising a rock bolt and a tension indication device as described above. Such a system is advantageous in that it promotes correct installation of the bolt by providing a visual indication of that the tension in the central rod has reached a predetermined level.

The system may further comprise a backing plate to be positioned around the outer body on a formation-facing side of the deformable body. The backing plate provides a robust and even surface for the deformable body to be pressed against upon tensioning of the nut, and as such promotes axisymmetric deformation of the deformable body.

According to a third aspect of the invention, the object is achieved by a method of operating the above described system. The method comprises the steps of driving the bolt into the formation, and of rotating the nut until the deformable body collapses or visibly deforms.

### Brief description of drawings

Figs. 1-4 all show a tension indication device according to a first embodiment.
Fig. 1 is a side view showing a system comprising a rock bolt and the tension indication device according to the first embodiment, before rotation of the nut for tensioning of the bolt.
Fig. 2 is a side view showing the system after correct tensioning of the bolt above a minimum tension required for the bolt in question, and with the deformable body visibly deformed by axial compression.
Figs. 5-18 show alternative embodiments of the deformable body in left and right pairs with the rightmost figure in each pair shown in cross-sectional view, except for figs. 10 and 12 which show a top view of each respective deformable body.
Fig. 19 shows experimental data from deformation of a cylindrical deformable body according to the first embodiment.
Fig. 20 shows a graph illustrating how force needed to deform the deformable body preferably varies with the amount of displacement/deformation of the deformable body.

| | | | |
|---|---|---|---|
| 1 | tension indication device | 8 | first support washer |
| 2 | rock bolt | 9 | radially outwards bulging portion/'elephant foot' |
| 3 | outer body | 10 | second support washer |
| 4 | central rod | 11 | central axis of deformable body |
| 5 | nut | 12 | central waist portion |
| 6 | deformable body | 13 | backing plate |
| 7 | central hole | 14 | formation |

### Detailed description

A rotation indication device 1 according to a first embodiment will hereinafter be described with reference to the appended drawings.

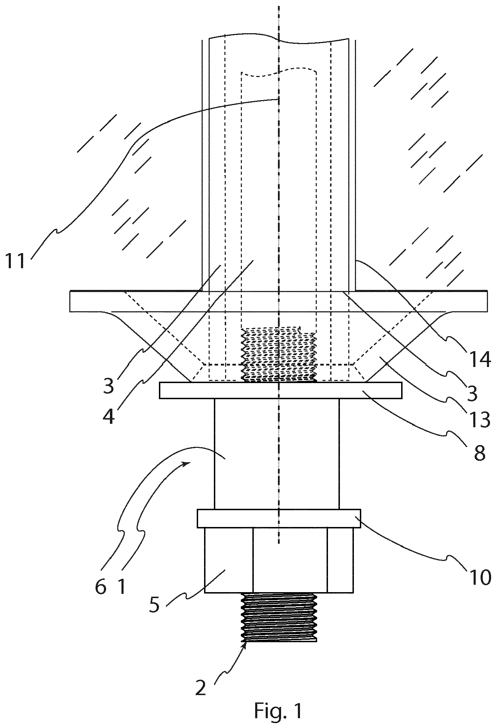

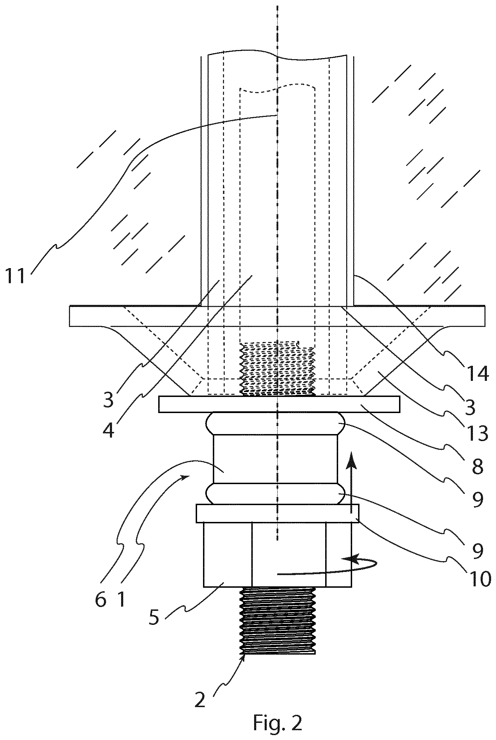

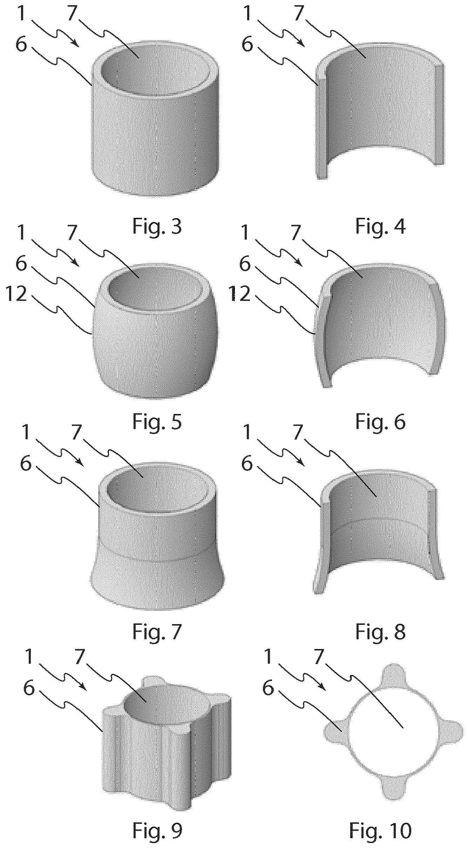

As shown in Figs. 1 and 2, the tension indication device 1 is used together with a rock bolt 2 driven into a formation 14 for reinforcement of the formation 14. The bolt 2 comprises an elongate outer body 3 and a central rod 4 comprising a trailing portion provided with a nut 5. The tension indication device 1 comprises a deformable body 6 in the form of a hollow-cylinder 8 comprising a central hole 7 (see Figs. 3-4) sized such that the tension indication device 1 fits around the trailing portion of the central rod 4 on a formation-facing side of the nut 5. The deformable body 6 is made of steel or aluminum but could in other embodiments alternatively be made of any other suitable material enabling a predictable deformation in response to increased pressure from the nut 5.

A backing plate 13 made of steel is positioned around the outer body 3 of the bolt. The backing plate comprises a central raised portion provided with a central hole sized to fit around the outer body 3 of the bolt 2. In other embodiments, the backing plate 13 could alternatively be square rather than round.

At rotation of the nut 5 after insertion of the bolt 2 into the formation 14, the nut 5 presses the deformable body 6 towards the formation 14, wherein the deformable body 6 is squeezed between the nut 5 and the formation 14, directly or indirectly by washers 8, 10 or similar on either side of the deformable body 6. Upon further increased pressure by the nut 5, the deformable body 6 eventually visibly deforms. This embodiment of the deformable body 6 upon deformation forms a single or a double radially outwards bulging portion 9, similar to an 'elephant foot', as shown in figs. 2 and 19. The radially outwards bulging portion 9 is visible from a distance far enough for it to be inspected standing on ground in a typical mine when the bolt is attached to the roof of the tunnel of the mine, i.e. it is visibly deformed. Further rotation of the nut 5 visibly deforms the deformable body even more.

As shown in Fig. 20, force initially increases (the tension in the bolt increases) as the nut 5 is rotated. However, after a while additional rotation of the nut 5 deforms the deformable body 6 but the force does not increase or increases at a lower rate. After some additional deformation, the force once again begins increasing at a higher rate when the deformable body 6 approaches a fully deformed state. The material and design of the deformable body 6 is such that a correct tensioning of the bolt is achieved somewhere in the horizontal region of the curve or higher up on the curve to the right hand side of the curve where the force rapidly increases upon further deformation.

Since the resistance to deformation of the deformable body 6 is known, the visible deformation provides a visual indicator of the tensioning of the central rod 4 of the bolt. Accordingly, deformation not visible to an adult human standing on ground in a typical mine is not to be considered visible deformation and should not be construed as an indication of correct tensioning of the central rod 4 of the bolt. For example, before the 'elephant foot' has formed on the deformable body according to the first embodiment, no visible deformation has occurred. In other words, the visual indication is based on collapse of the deformable body upon reaching a predetermined tension in the central rod 4. Hence, the tension indication device 1 according to this embodiment comprises a deformable body 6 having a shape, material and dimensioning configured such that upon being forced by the nut 5 towards the formation 14 with a first force the deformable body 6 remains visibly intact until the first force exceeds a predetermined level of force, wherein the deformable body 6 collapses upon said first force exceeding the predetermined level of force.

In the illustrated embodiment, the tension indication device 1 is used together with a first support washer 8 provided on the formation-facing side of the deformable body 6 and second support washer 10 provided on the nut-facing side of the deformable body 6. The tension indication device 1 could, depending on the circumstances, such as depending on the design of the nut and of the backing plate, be used with only one support washer 8, 10 or with no support washers 8, 10 at all. The first 8 and second 10 support washers provide planar surfaces suitable for evenly pressurizing the deformable body 6 as the nut 5 rotates upon tensioning of the nut 5.

The material of the cylinder is aluminum but could alternatively be steel, a malleable material, such as lead, or a composite comprising an inner body of polymeric material and an outer body of metal, or any other material suitable for providing for a predictable collapse.

In the alternative embodiment of the deformable body 6 shown in Figs. 5-6, the deformable body 6 is axisymmetric about its central axis 11 and widening from its opposing ends towards a central waist portion 12. The barrel-like shape promotes collapsing radially outwards and thus improves predictability of the collapse. The deformable body 6 has uniform wall thickness but the wall thickness could in other embodiments alternatively vary as long as the collapse is still predictable in response to increased tension in the central rod 4.

In the alternative embodiment shown in Figs. 7-8, the deformable body 6 is axisymmetric about its central axis 11. Also, the deformable body 6 comprises a cylindrical portion and a conical portion widening towards an end of the deformable body.

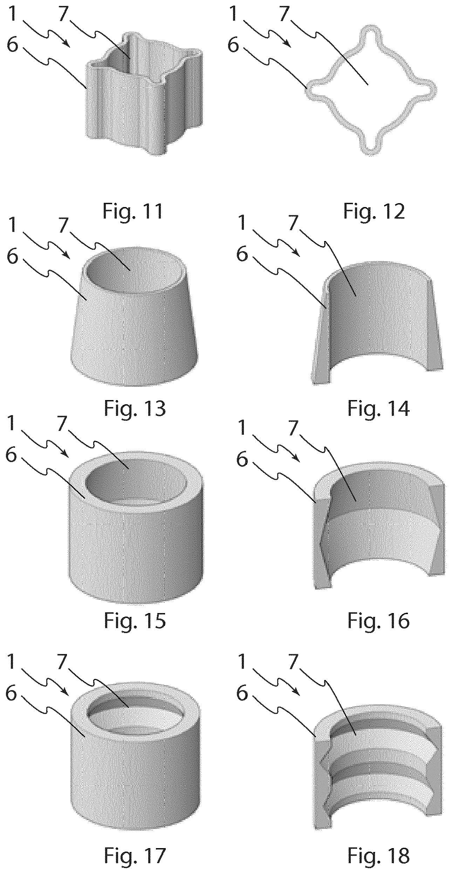

In the alternative embodiment shown in Figs. 9-10, the deformable body 6 has a constant cross-sectional shape defined by a cylindrical main portion provided with a plurality of radially outwards protruding ribs extending along the length of the deformable body 6. In this embodiment, there are four such ribs, but the number of ribs could be higher or lower. In the alternative embodiment shown in Figs. 11-12, the ribs are provided with radially inwardly open recesses extending along the length of the ribs. The wall thickness of the deformable body may thereby be made constant around the circumference of the deformable body 6 but could in other embodiments be configured with varying wall thickness. The embodiments of figs. 9-12 behave similar to the cylindrical deformable body 6 of the first embodiment.

Due to the constant cross-sectional shape, the deformable body 6 is suitable for production by extrusion. After extrusion, a body formed could be deformed by other production methods such as spinning/metal spinning to thereby form other shapes such as the shapes of Figs. 5-8.

In the alternative embodiment shown in Figs. 13-14, the deformable body 6 is hollow-frustoconical. Such a deformable body 6 will crush more gently and the force displacement curve (see fig. 20) will have a longer plateau.

In the alternative embodiment shown in Figs. 15-16, the deformable body 6 is axisymmetric and wherein the wall thickness of the deformable body is decreasing towards a central waist portion. The thinner wall thickness at the central waist portion promotes start of deformation at the central waist portion.

In the alternative embodiment shown in Figs. 17-18, the deformable body comprises a plurality of circumferential recesses distributed along the central axis of the deformable body. Each circumferential recess proves a 'crush zone' and the provision of a plurality of such crush zones extends the plateau of the force-displacement curve.

Preferably, the deformable body is configured such that the plateau of the force-displacement diagram is upwardly inclined, i.e. such that more force is always required for further deformation of the deformable body at normal use of the tension indicator, i.e. at stresses associated with normal use of the tension indicator.

The tension indication device 1 may be provided as a separate product or may be provided as a system comprising a rock bolt 2 and a tension indication device 1. The system may also comprise the backing plate 13 to be positioned around the outer body 3.

Upon installation of a rock bolt 2 the backing plate 13 is positioned around the outer body 3 of the rotation indication device 1 where after the bolt 2 is driven into the formation 14. The nut 5 is then rotated to tension the central rod 4. Tensioning of the central rod 4 by rotation of the nut 5 is continued at least until visual deformation of the deformable body has occurred, such as by collapse, wherein you know that the tensioning of the central rod 4 has reached a predetermined level. The rotation indication device 1 can be positioned around the trailing portion of the central rod 4 either before or after the rock bolt 2 has been driven into the formation 14.

Within this disclosure, a deformable body is a body which is visibly deformable under the range of tension/stress normally exerted on a rock bolt at tensioning to the recommended tension in use of the rock bolt. Thus, a body not visibly deformable at such recommended tensioning of the rock bolt is not to be construed as a deformable body within the context of this disclosure.

## Claims

1. A tension indication device (1) for a rock bolt (2) for reinforcement of a formation (14),
wherein the bolt (2) comprises an elongate outer body (3) and a central rod (4) comprising a trailing portion provided with a nut (5), and
wherein the tension indication device (1) comprises a deformable body (6) comprising a central hole (7) sized such that the tension indication device fits around the trailing portion of the central rod (3) on a formation-facing side of the nut (5).

2. A tension indication device (1) according to claim 1,
wherein the shape, material and dimensioning of the deformable body (6) is such that upon being forced by the nut (5) towards the formation (14) with a first force the deformable body (6) remains visibly intact until the first force exceeds a predetermined level of force, wherein the deformable body (6) collapses or visibly deforms upon said first force exceeding the predetermined level of force.

3. A tension indication device (1) according to any one of claims 1-2, wherein the deformable body (6) has an axisymmetric shape about its central axis (11).

4. A tension indication device (1) according to claim 3, wherein the deformable body (6) is hollow-cylindrical.

5. A tension indication device (1) according to claim 3, wherein the deformable body (6) is widening from its opposing ends towards a central waist portion (12).

6. A tension indication device (1) according to claim 3, wherein the deformable body (6) comprises a cylindrical portion and a conical portion widening towards an end of the deformable body (6).

7. A tension indication device (1) according to claim 3, wherein the deformable body (6) is hollow-frustoconical.

8. A tension indication device (1) according to claim 3, wherein the deformable body (6) wherein the wall thickness of the deformable body is decreasing towards a central waist portion.

9. A tension indication device (1) according to any one of claims 1-6, wherein the deformable body (6) has uniform wall thickness.

10. A tension indication device (1) according to claim 3, wherein the deformable body (6) comprises a plurality of circumferential recesses distributed along the central axis (11) of the deformable body (6).

11. A tension indication device (1) according to any one of claims 1-2, wherein the deformable body (6) has a constant cross-sectional shape defined by a cylindrical main portion provided with a plurality of radially outwards protruding ribs extending along the length of the deformable body (6).

12. A tension indication device (1) according to claim 11, wherein the ribs are provided with radially inwards open recesses extending along the length of the ribs.

13. A tension indication device (1) according to any one of the preceding claims, further comprising a first support washer (8) positioned at the formation-side of the deformable body (6).

14. A tension indication device (1) according to any one of the preceding claims, further comprising a second support washer (10) positioned at the nut-facing side of the deformable body (6).

15. A system comprising a tension indication device (1) according to any one of claims 1-14 and the rock bolt (2).

16. A system according to claim 15, wherein the system further comprises a backing plate (13) to be positioned around the outer body (3) on a formation-facing side of the deformable body (6).

17. A method of operating a system according to any one of claims 15-16, comprising the steps of:
driving the bolt (2) into the formation, and
rotating the nut (5) until the deformable body (6) collapses or visibly deforms.
